# EUROPEAN PATENT APPLICATION

(11) **EP 3 401 636 A1**
(43) Date of publication of application: **14.11.2018**
(21) Application number: 16806611.6
(22) Date of filing: 22.04.2016
(51) Int. Cl.: G01B 21/32, H01M 2/10, H01M 10/42, H01M 10/48, G01B 7/16

(54) **BATTERY DEFORMATION DETECTION METHOD AND DEVICE**

(30) Priority: 08.01.2016 CN 201610013435
(71) Applicant: ZTE Corporation, Shenzhen, Guangdong 518057 (CN)
(72) Inventor: WANG, Yuchen, Shenzhen Guangdong 518057 (CN)
(74) Representative: Lavoix
(86) International application number: PCT/CN2016/080053
(87) International publication number: WO 2016/197713

(57) **Abstract**

A battery deformation detection method. The method comprises providing a pressure sensor (201) in a battery compartment (200), acquiring a pressure value detected by the pressure sensor (201) provided in the battery compartment (200), and then determining whether deformation has occurred to a battery (202) in the battery compartment (200) according to the pressure value. Also disclosed is a battery deformation detection device.

## Description

### TECHNICAL FIELD

The invention relates, but not limited, to terminal devices, and more particularly, to a method and device for detecting battery deformation.

### BACKGROUND

Improper use of a battery cell includes applying a battery with relatively low temperature adaptability for some products with high temperature. If the battery works at a relatively high temperature for a long time, it is swollen and has a potential security hazard. Some existing mobile phone products also have such problems as battery fire or explosion due to unqualified batteries and/or inappropriate charging protection.

At present, a battery deformation detection method is provided by attaching a variable resistor onto a surface of a battery. After a piezoresistor is attached to the battery and if the piezoresistor is subject to a certain pressure, the resistance will be changed. At this moment, it is considered that the battery is deformed. However, the arrangement of the variable resistor on the battery results in increased cost of the battery.

### SUMMARY

The following is an overview to the subject in the detailed description of the invention, rather than limiting a scope of protection of the claims.

The invention provides a method and device for detecting battery deformation, which can detect a deformation of a battery applied to a terminal at a relatively low cost.

An embodiment of the invention provides a method for detecting battery deformation. A pressure value detected by a pressure sensor arranged in a battery compartment is acquired. It is determined whether a battery in the battery compartment is deformed or not according to the pressure value and a pre-set security threshold.

Optionally, the operation of determining whether a battery in the battery compartment is deformed or not according to the pressure value and the pre-set security threshold includes that the battery is determined to be deformed when a duration that the pressure value reaches to the security threshold is determined to exceed a designated value. Or, the battery is determined to be deformed when there are two pressure values with a difference reaching to the security threshold in pressure values detected by multiple pressure sensors arranged in the battery compartment and a duration that the difference reaches to the security threshold exceeds the designated value.

Optionally, the security threshold is set according to structural strength of the battery compartment.

Optionally, the operation of determining the battery to be deformed when a duration that the pressure value reaches to the security threshold is determined to exceed the designated value includes that placement of a current device is judged via a gyroscope, a security threshold corresponding to a current placement is selected out from security thresholds corresponding to multiple kinds of placement, and the battery is determined to be deformed when a duration that the pressure value reaches to the security threshold corresponding to the current placement is determined to exceed the designated value.

Optionally, after the battery is determined to be deformed, the method further includes that an alarm is performed; and/or a shutdown process is triggered and a power supply is cut off when being connected.

An embodiment of the invention further provides a device for detecting battery deformation. The device includes a receiving unit and a determination unit. The receiving unit is configured to acquire a pressure value detected by a pressure sensor arranged in a battery compartment. The determination unit is configured to determine whether a battery in the battery compartment is deformed or not according to the pressure value and a pre-set security threshold.

Optionally, the determination unit is configured to determine that the battery is deformed when a duration that the pressure value reaches to the security threshold is determined to exceed a designated value; or determine that the battery is deformed when there are two pressure values with a difference reaching to the security threshold in pressure values detected by multiple pressure sensors arranged in the battery compartment and a duration that the difference reaches to the security threshold exceeds the designated value.

Optionally, the determination unit is configured to determine that the battery is deformed when the duration that the pressure value reaches to the security threshold is determined to exceed the designated value by the operation of: judging placement of a current device via a gyroscope, selecting out a security threshold corresponding to a current placement from security thresholds corresponding to multiple kinds of placement, and determining that the battery is deformed when a duration that the pressure value reaches to the security threshold corresponding to the current placement is determined to exceed the designated value.

An embodiment of the invention further provides a device for detecting battery deformation, which includes a processor and a battery compartment provided with a pressure sensor. The processor is configured to acquire a pressure value detected by the pressure sensor arranged in the battery compartment, and determine whether a battery in the battery compartment is deformed or not according to the pressure value and a pre-set security threshold.

Optionally, the processor is configured to determine whether the battery in the battery compartment is deformed or not according to the pressure value and the security threshold by determining that the battery is deformed when a duration that the pressure value reaches to the security threshold is determined to exceed a designated value; or determining that the battery is deformed when there are two pressure values with a difference therebetween reaching to the security threshold in pressure values detected by multiple pressure sensors arranged in the battery compartment and a duration that the difference reaches to the security threshold exceeds the designated value.

An embodiment of the invention further provides a computer readable storage medium having stored therein computer executable instructions. The computer executable instructions implement the above methods when being executed by a processor.

According to the method and device for detecting battery deformation provided by the embodiments of the invention, the pressure sensor is arranged in the battery compartment. The pressure value detected by the pressure sensor arranged in the battery compartment is acquired and thus it is determined whether the battery in the battery compartment is deformed or not according to the pressure value. Since the pressure sensor is arranged within the battery compartment, the cost of the battery is reduced.

After the accompanying drawings and detailed descriptions are read and comprehended, other aspects may be understood.

### BRIEF DESCRIPTION OF DRAWINGS

FIG. 1 is a flowchart of a method for detecting battery deformation provided by an embodiment of the invention.
FIG. 2 is a schematic diagram for setting a pressure sensor of a first embodiment provided by an embodiment of the invention.
FIG. 3 is a schematic diagram for setting a pressure sensor of a second embodiment provided by an embodiment of the invention.
FIG. 4 is a first structural schematic diagram of a device for detecting battery deformation provided by an embodiment of the invention.
FIG. 5 is a second structural schematic diagram of a device for detecting battery deformation provided by an embodiment of the invention.

### DETAILED DESCRIPTION

The embodiments of the invention will be described below in detail with reference to the accompanying drawings. It is noted that, the embodiments of the present application and the characteristics in the embodiments may be combined with each other freely if there is no conflict.

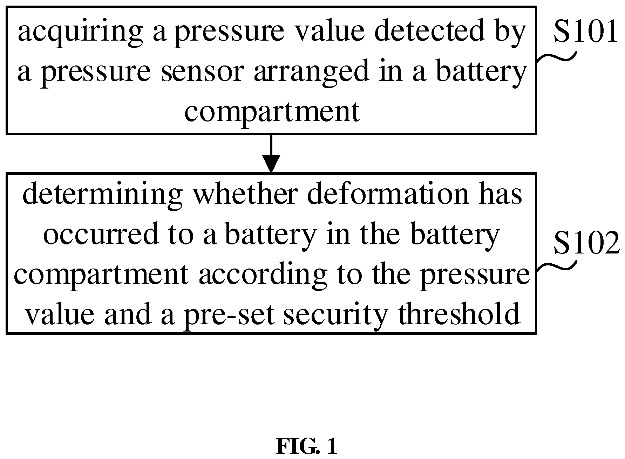

As shown in FIG. 1, a method for detecting battery deformation provided by an embodiment of the invention includes the following operations.

At Step S101, a pressure value detected by a pressure sensor arranged in a battery compartment is acquired.

At Step SI02, it is determined whether a battery in the battery compartment is deformed or not according to the pressure value and a pre-set security threshold.

The pressure sensor is arranged in the battery compartment. The pressure value detected by the pressure sensor arranged in the battery compartment is acquired and thus it is determined whether the battery in the battery compartment is deformed or not according to the pressure value. Since the pressure sensor is arranged in the battery compartment, the cost of the battery is reduced.

If a mobile phone has a battery compartment with the material of very high hardness, a deformation of a battery is limited. It may be not timely detected whether the battery is deformed or not. As a result, the battery is in a dangerous situation before the deformation reaches to a certain extent. In order to avoid such a situation, the security threshold may be set according to structural strength of the battery compartment.

That is, the security threshold is set according to the structural strength of the battery compartment in delivery. In use, the pressure value detected by the pressure sensor arranged in the battery compartment is acquired, and it is determined whether the battery is deformed or not according to the pressure value and the security threshold set according to the structural strength of the battery compartment. As such, the accuracy of determining the deformation of the battery is improved, and the probability of a danger caused by the deformation of the battery is reduced.

A method of determining whether the battery in the battery compartment is deformed or not according to the pressure value will be described below in detail in conjunction with specific embodiments.

### Embodiment one

In this embodiment, a security threshold is set in advance. When a pressure value reaches to the security threshold, it is indicated that a battery may be deformed. If a duration that the pressure value reaches to the security threshold exceeds a designated value, it may be determined that the battery is deformed.

In this case, in the step S102, the operation that it is determined whether a battery in the battery compartment is deformed or not according to the pressure value and the pre-set security threshold includes that the battery is determined to be deformed when the duration that the pressure value reaches to the security threshold is determined to exceed the designated value.

The security threshold may be set according to the structural strength of the battery compartment in delivery. In use, the pressure value detected by the pressure sensor arranged in the battery compartment is acquired, and it is determined whether the battery is deformed or not according to the pressure value and the security threshold set according to the structural strength of the battery compartment. As such, the accuracy of determining the deformation of the battery is improved, and the probability of a danger caused by the deformation of the battery is reduced.

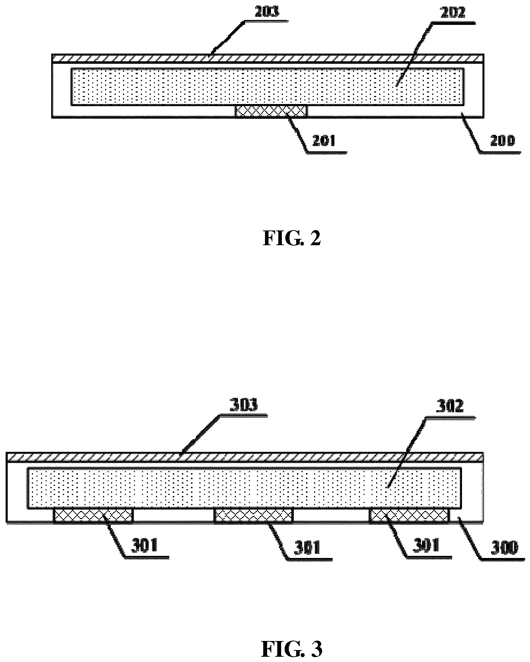

A feasible method for setting a pressure sensor is as shown in FIG. 2. The pressure sensor 201 is arranged in a battery compartment 200 and is tightly attached to a battery 202. The pressure sensor 201 and a rear cover 203 are respectively arranged at two sides of the battery 202.

The pressure sensor produces an initial pressure when the device is placed at different positions. When the battery is deformed, since the thickness of the battery is increased, a downward pressure will be applied to the battery compartment. The pressure sensor placed below the battery compartment will transfer a pressure value to a Central Processing Unit (CPU). When the pressure reaches to the security threshold, the CPU may trigger protective measures such as an alarm, thereby improving the security of the battery and the device.

It is noted that when the battery of the device is not provided with the rear cover or the material strength and the deformability of the rear cover are different, the pressures applied to the pressure sensor are also different. For example, when the rear cover of the device is soft, the pressure applied to the bottom of the battery from 1mm deformation of the battery is less than that when the rear cover of the device is hard. With respect to such a situation, security thresholds with different amplitudes are required to be preset according to the structural strength of the battery compartment when the device is delivered. Besides, when the device is used without the cover, the pressures of a same battery to the pressure sensor are also different. That is, the security threshold when the device is used with the rear cover is different from that when the rear cover is removed.

The operation that the battery is determined to be deformed when a duration that the pressure value reaches to the security threshold set according to the structural strength of the battery compartment is determined to exceed the designated value includes that the pressure value is determined to reach to the security threshold set according to the structural strength of the battery compartment, timing is started and pressure values of the pressure sensor are continuously acquired, and if all pressure values acquired before a count time exceeds a designated value reach to the security threshold, the battery is determined to be deformed.

During the count time, if the acquired pressure values are smaller than the security threshold, it is determined that the battery is not deformed. When a pressure value reaching to the security threshold is acquired again, the timing is restarted.

In general, after the device is started, the pressure values of the pressure sensor may be periodically acquired. In this embodiment of the invention, the device is started in two ways. One is that the device is powered on to enter a service state or a standby state, and the other is that a power supply is inserted in a shutdown state, only an inner core is started and a user system is not started.

Different placement of the device also may affect the pressures of the battery on the pressure sensor. For example, when the device is placed with a front upward, placed with a back upward or placed laterally, the pressures generated by the battery to the pressure sensor may be different. In order to further improve the accuracy of judging the deformation of the battery, multiple security thresholds may be set according to the different placement of the device. When it is determined whether the battery is deformed or not, a security threshold corresponding to a current placement is used.

In this case, the operation that the battery is determined to be deformed when a duration that the pressure value reaches to the security threshold set according to the structural strength of the battery compartment is determined to exceed the designated value includes that placement of a current device is judged via a gyroscope, a security threshold corresponding to a current placement is selected out from security thresholds corresponding to multiple kinds of placement, and the battery is determined to be deformed when a duration that the pressure value reaches to the security threshold corresponding to the current placement is determined to exceed the designated value.

When the multiple security thresholds are set according to the different placement of the device, it may be appropriate to put a battery model whose deformation is beyond the designated value into the battery compartment to perform a pressure test on each placement. For example, a battery model whose deformation is beyond 1mm may be used. The placement of the device is detected via the gyroscope, pressure values of the pressure sensor under different placement are acquired, and security thresholds under different placement are respectively determined according to the pressure values of the pressure sensor under the different placement. If there is a little difference in terms of pressure value of the pressure sensor under each of the placement (compared with a change in pressure values before and after the battery is deformed, the difference in the pressure values of the pressure sensor under the different placement may be ignored), it may also be appropriate to only set one security threshold. When it is determined whether the battery is deformed or not, the placement of the current device is no longer judged and the security threshold is no longer selected according to the placement.

After the battery is determined to be deformed, security measures such as an alarm may be adopted. In this case, after the step S102, the method further includes the following operations. An alarm is performed; and/or a shutdown process is triggered and a power supply is cut off when being connected.

If the device is in a power-on charging or shutdown charging state, it is required to cut off the power supply and trigger the shutdown process, thereby guaranteeing the security of the battery and the device. If the device is not connected with the power supply and is in a normal power-on state, the shutdown process may be triggered directly.

### Embodiment two

In this embodiment, multiple pressure sensors are arranged in a battery compartment. When a battery is not deformed, a pressure value detected by each of the pressure sensors is almost the same or has a little difference. When the battery is deformed, a pressure value detected by each of the multiple pressure sensors is generally different from each other. If a difference between the two pressure values reaches to a security threshold and a duration thereof is greater than a designated value, it may be determined that the battery is deformed.

In this case, in the step S102, the operation that it is determined whether the battery in the battery compartment is deformed or not according to the pressure value and the security threshold includes that the battery is determined to be deformed when there are two pressure values with a difference therebetween reaching to the security threshold in pressure values detected by the multiple pressure sensors arranged in the battery compartment and a duration that the difference reaches to the security threshold exceeds the designated value.

A feasible method for setting pressure sensors is as shown in FIG. 3. Multiple pressure sensors 301 are arranged in a battery compartment 301. Each of the pressure sensors 301 is tightly attached to a battery 302. The pressure sensors 301 and a rear cover 303 are respectively arranged at two sides of the battery 202.

In a state in which the battery is not deformed, the stress condition of each of the pressure sensors is the same. After the battery is deformed, the stress of a pressure sensor at a swollen place is greater than that of other pressure sensors. Therefore, when there are two pressure values with a difference reaching to the security threshold in pressure values detected by the multiple pressure sensors, the battery may be deformed. If there are two pressure values with a difference reaching to the security threshold in acquired pressure values in a designated time, it may be determined that the battery is deformed.

The operation that the battery is determined to be deformed when there are two pressure values with the difference therebetween reaching to the security threshold in pressure values detected by the multiple pressure sensors arranged in the battery compartment and a duration that the difference reaches to the security threshold exceeds the designated value includes that the two pressure values with the difference reaching to the security threshold in the pressure values detected the multiple pressure sensors arranged in the battery compartment are determined, timing is started and a pressure value of each of the pressure sensors is continuously acquired, and if there are two pressure values with a difference reaching to the security threshold in each group of pressure values acquired before a count time exceeds the designated value, the battery is determined to be deformed.

After the battery is determined to be deformed, security measures such as an alarm may be adopted. In this case, after the step S102, the method further includes the following operations. An alarm is performed; and/or a shutdown process is triggered and a power supply is cut off when being connected.

If the device is in a power-on charging or shutdown charging state, it is required to cut off the power supply and trigger the shutdown process, thereby guaranteeing the security of the battery and the device. If the device is not connected with the power supply and is in a normal power-on state, the shutdown process may be triggered directly.

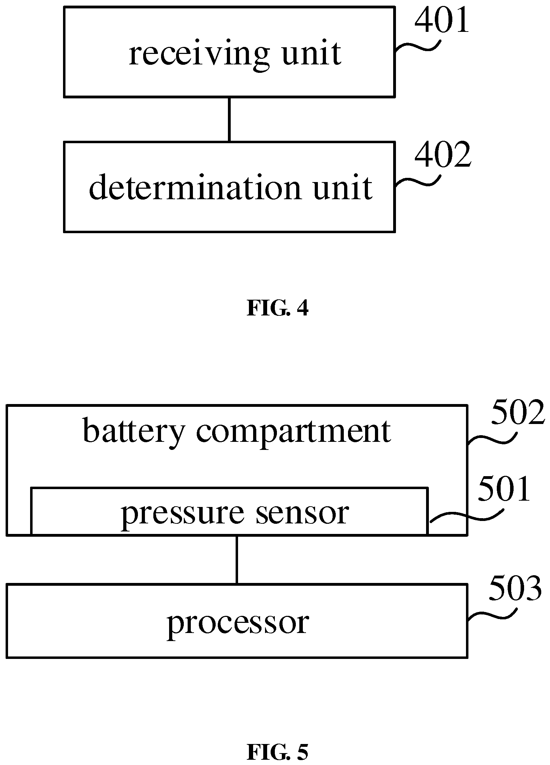

An embodiment of the invention further provides a device for detecting battery deformation. As shown in FIG. 4, the device for detecting battery deformation includes a receiving unit 401 and a determination unit 402.

The receiving unit 401 is configured to acquire a pressure value detected by a pressure sensor arranged in a battery compartment.

The determination unit 402 is configured to determine whether a battery in the battery compartment is deformed or not according to the pressure value and a pre-set security threshold.

Optionally, the determination unit 402 is configured to determine that the battery is deformed when a duration that the pressure value reaches to the security threshold is determined to exceed a designated value; or determine that the battery is deformed when there are two pressure values with a difference reaching to the security threshold in pressure values detected by multiple pressure sensors arranged in the battery compartment and a duration that the difference reaches to the security threshold exceeds the designated value.

Optionally, in order to improve the accuracy of determining whether the battery is deformed, the determination unit 402 is configured to determine that the battery is deformed using the following manners when the duration that the pressure value reaches to the security threshold is determined to exceed the designated value:
judging placement of a current device via a gyroscope;
selecting out a security threshold corresponding to a current placement from security thresholds corresponding to multiple kinds of placement; and
determining that the battery is deformed when a duration that the pressure value reaches to the security threshold corresponding to the current placement is determined to exceed the designated value.

An embodiment of the invention further provides a device for detecting battery deformation. As shown in FIG. 5, the device for detecting battery deformation includes a processor 503 and a battery compartment 502 provided with a pressure sensor 501.

The processor 503 is configured to obtain a pressure value detected by the pressure sensor 501 arranged in the battery compartment 502, and determine whether a battery in the battery compartment 502 is deformed or not according to the pressure value and a pre-set security threshold.

The processor 503 is configured to determine whether the battery in the battery compartment 502 is deformed or not using the following manners according to the pressure value and the pre-set security threshold:
determining that the battery is deformed when a duration that the pressure value reaches to the security threshold is determined to exceed a designated value; or
determining that the battery is deformed when there are two pressure values with a difference reaching to the security threshold in pressure values detected by multiple pressure sensors 501 arranged in the battery compartment 502 and a duration that the difference reaches to the security threshold exceeds the designated value.

According to the method and device for detecting battery deformation provided by the embodiments of the invention, the pressure sensor is arranged in the battery compartment. The pressure value detected by the pressure sensor arranged in the battery compartment is acquired and thus it is determined whether the battery in the battery compartment is deformed or not according to the pressure value. Since the pressure sensor is arranged in the battery compartment, the cost of the battery is reduced.

Those skilled in the art may understand that all or partial steps in the method may be implemented using a program to direct related hardware (e.g. a processor). The program may be stored in a computer readable storage medium, such as a read-only memory, a magnetic disk or an optical disk. Optionally, all or partial steps of the embodiments also may be implemented using one or more integrated circuits. Correspondingly, each module/unit in the embodiments may be implemented using a hardware form, such as respective functions are implemented via an integrated circuit, and may also be implemented using a software functional module, such as the respective functions are implemented by a processor executing the program stored in the memory. The invention is not limited to a combination of hardware and software in any specific form.

It is noted that, the invention may further have other various embodiments. A person skilled in the art may make various changes and alternations according to the invention without departing from the spirit and essence of the invention, and all of these changes and alternations fall within a scope of protection in appended claims.

### INDUSTRIAL APPLICABILITY

According to the technical solutions provided by the embodiments of the invention, the pressure sensor is arranged in the battery compartment. The pressure value detected by the pressure sensor arranged in the battery compartment is acquired and thus it is determined whether the battery in the battery compartment is deformed or not according to the pressure value. Since the pressure sensor is arranged in the battery compartment, the cost of the battery is reduced.

## Claims

1. A method for detecting battery deformation, comprising:
acquiring a pressure value detected by a pressure sensor arranged in a battery compartment; and
determining whether a battery in the battery compartment is deformed or not according to the pressure value and a pre-set security threshold.

2. The method according to claim 1, wherein determining whether the battery in the battery compartment is deformed or not according to the pressure value and the pre-set security threshold comprises:
determining that the battery is deformed responsive to determination of a duration that the pressure value reaches to the security threshold to exceed a designated value; or
determining that the battery is deformed when there are two pressure values with a difference reaching to the security threshold in pressure values detected by multiple pressure sensors arranged in the battery compartment and a duration that the difference reaches to the security threshold exceeds a designated value.

3. The method according to claim 1, wherein
the security threshold is set according to structural strength of the battery compartment.

4. The method according to claim 2, wherein determining that the battery is deformed responsive to determination of the duration that the pressure value reaches to the security threshold to exceed the designated value comprises:
judging placement of a current device via a gyroscope;
selecting out a security threshold corresponding to a current placement from security thresholds corresponding to multiple kinds of placement; and
determining that the battery is deformed when a duration that the pressure value reaches to the security threshold corresponding to the current placement is determined to exceed the designated value.

5. The method according to any one of claims 1-4, after the battery is determined to be deformed, further comprising:
performing an alarm; and/or
triggering a shutdown process and cutting off a power supply in case of connecting the power supply.

6. A device for detecting battery deformation, comprising:
a receiving unit, configured to acquire a pressure value detected by a pressure sensor arranged in a battery compartment; and
a determination unit, configured to determine whether a battery in the battery compartment is deformed or not according to the pressure value and a pre-set security threshold.

7. The device according to claim 6, wherein the determination unit is configured to:
determine that the battery is deformed responsive to determination of a duration that the pressure value reaches to the security threshold to exceed a designated value; or
determine that the battery is deformed when there are two pressure values with a difference reaching to the security threshold in pressure values detected by multiple pressure sensors arranged in the battery compartment and a duration that the difference reaches to the security threshold exceeds a designated value.

8. The device according to claim 7, wherein the determination unit is configured to determine that the battery is deformed responsive to determination of the duration that the pressure value reaches to the security threshold to exceed the designated value by the operations of:
judging placement of a current device via a gyroscope;
selecting out a security threshold corresponding to a current placement from security thresholds corresponding to multiple kinds of placement; and
determining that the battery is deformed when a duration that the pressure value reaches to the security threshold corresponding to the current placement is determined to exceed the designated value.

9. A device for detecting battery deformation, comprising a processor and a battery compartment provided with a pressure sensor, wherein
the processor is configured to acquire a pressure value detected by the pressure sensor arranged in the battery compartment, and determine whether a battery in the battery compartment is deformed or not according to the pressure value and a pre-set security threshold.

10. The device according to claim 9, wherein
the processor is configured to determine whether the battery in the battery compartment is deformed or not according to the pressure value and the pre-set security threshold by the operations of:
determining that the battery is deformed responsive to determination of a duration that the pressure value reaches to the security threshold to exceed a designated value; or
determining that the battery is deformed when there are two pressure values with a difference reaching to the security threshold in pressure values detected by multiple pressure sensors arranged in the battery compartment and a duration that the difference reaches to the security threshold exceeds a designated value.
